Europäischen Patentamt

(19) European Patent Office

Office européen des brevets

(11) Publication number: **0 168 153**
**A2**

(12) **EUROPEAN PATENT APPLICATION**

(21) Application number: 85303835.4

(22) Date of filing: 30.05.85

(51) Int. Cl.⁴: **F 16 C 3/26**

(30) Priority: 09.07.84 JP 141759/84

(43) Date of publication of application:
15.01.86 Bulletin 86/3

(84) Designated Contracting States:
DE GB

(71) Applicant: FUJI JUKOGYO KABUSHIKI KAISHA
7-2 Nishi Shinjuku 1-chome Shinjuku-ku
Tokyo(JP)

(72) Inventor: Matsunaga, Seiki
1-2-58, Ohsawa
Mitaka-shi Tokyo(JP)

(72) Inventor: Tayama, Masahiro
1460 Hazama-cho
Hachiohji-shi Tokyo(JP)

(72) Inventor: Ozawa, Masahiro
1935-17 Amema
Akigawa-shi Tokyo(JP)

(74) Representative: Kirk, Geoffrey Thomas et al,
BATCHELLOR, KIRK & EYLES 2 Pear Tree Court
Farringdon Road
London EC1R 0DS(GB)

(54) Crankshaft for an internal combustion engine.

(57) A crankshaft 1 of an internal combustion engine has a flywheel 6 provided at one end of the crankshaft and a main-bearing journal 23 adjacent to the flywheel. An annular groove 5 is provided on the periphery of the main-bearing journal 23, so that the crankshaft 1 is bent at the groove by forces on the crankshaft so as to diverge stresses.

# FIG. 1

## CRANKSHAFT FOR AN INTERNAL COMBUSTION ENGINE.

The present invention relates to a crankshaft for an internal combustion engine.

In a conventional internal combustion engine, stress concentration occurs in the juncture of a crank arm and a crankpin which receives a connecting-rod of a piston, adjacent to a flywheel. In order to prevent the concentration of stresses, heretofore various improvements on shape, material, and manufacturing process of the crankshaft have been proposed.

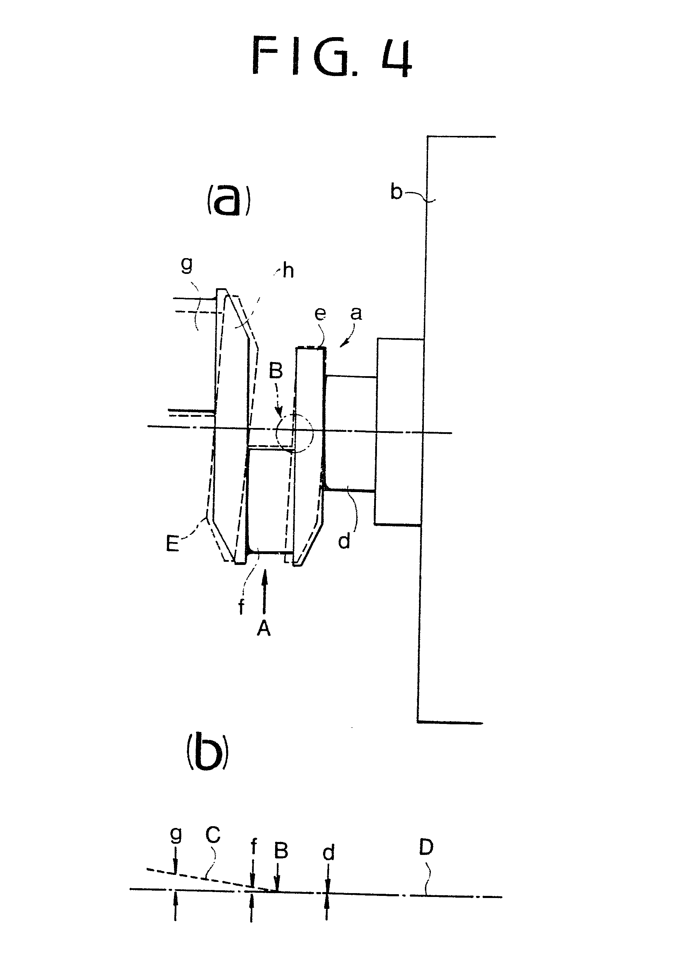

Factors causing such stress concentration are explained hereinafter with reference to Figures 4a and 4b. In Figure 4a, a crankshaft $a$ comprises crank arms $e$ and $h$, connecting-rod journals (crankpin) $f$ and $g$, and a main-bearing journal $d$ which is connected to a flywheel $b$. When a force is applied in the direction $A$ to the connecting-rod journal $f$ through a connecting-rod (not shown) for an end cylinder adjacent to the flywheel $b$, the flywheel $b$ and the main-bearing journal $d$ adjacent to the flywheel $b$ are hardly deflected because of their great masses. On the other hand, in the case of crankshaft $a$ of a four-cylinder in-line engine, for example, crank arm $e$ of the fourth cylinder adjacent to the flywheel $b$, connecting-rod journal $f$, crank arm $h$, and connecting-rod journal $g$ of the third cylinder are deflected by the force as shown by the broken line E in Figure 4a. The bending of the crankshaft is schematically indicated in Figure 4b by a broken line C in relation to the axis of the crankshaft shown by a broken line D. It will be seen that the crankshaft is bent at a point $B$. In other words, at the point $B$, which is the juncture of the fourth connecting-rod journal $f$ and the crank arm $e$, stress concentration occurs. Such stress may cause the crankshaft to be bent or to fracture. In order to prevent such failures, Japanese Utility Model Laid Open 56-49312 and Japanese Patent Laid Open 59-16126, for example, suggest improving the rigidity and strength of the crankshaft by increasing sectional areas of appropriate portions of the crankshaft. However, some problems remain, for example: the mass of the crankshaft is increased by the reinforcement; stress concentration still occurs in spite of the reinforcement; and design and manufacturing process of the crankshaft become more complicated.

Therefore, the present invention seeks to provide a crankshaft which may overcome the above-mentioned problems and improve the fatigue limit and the strength of the crankshaft.

The present invention provides a crankshaft for connection by an end to a flywheel in an internal combustion engine, the crankshaft having a main-bearing journal at the end where the crankshaft and flywheel connect, and characterised by a groove at the periphery of the main-bearing journal, whereby when the crankshaft is subject to a bending force the shaft can flex at the groove.

In one embodiment of the present invention, a plurality of arcuate grooves are formed on the main-bearing journal.

Preferred embodiment of the present invention will now be described, by way of example and with reference to the accompanying drawings, wherein:

Figures 1 shows the construction of a crankshaft of an internal combustion engine according to a preferred embodiment of the present invention;

Figure 2a shows the bending of the crankshaft of Figure 1;

Figure 2b schematically shows the bending of the crankshaft shown in Figure 2a;

Figure 3a is a perspective view showing a part of the crankshaft of Figure 1;

Figure 3b is a similar view to the Figure 3a but shows another embodiment of the present invention;

Figure 4a shows a part of a conventional crankshaft; and

Figure 4b schematically shows the bending of the crankshaft of Figure 4a.

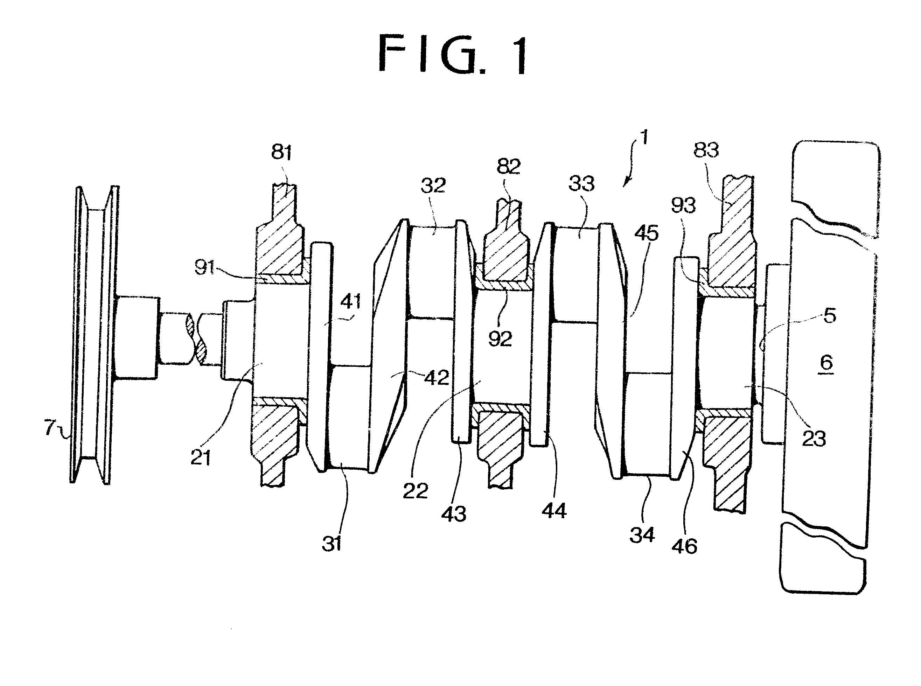

Referring to Figures 1 to 3, a crankshaft of a four-cylinder in-line combustion engine, generally indicated by the numeral 1 has a flywheel 6 secured thereto at an output end, and a drive pulley 7 mounted on the other end thereof. The crankshaft 1 is supported at a first main-bearing journal 21, second main-bearing journal 22, and a third main-bearing journal 23 by main bearings 91, 92 and 93 provided in bulkheads 81, 82 and 83. A first connecting-rod journal 31, second connecting-rod journal 32, third connecting-rod journal 33 and fourth connecting-rod journal 34 are formed on the crankshaft at ends of crank arms 41 to 46, respectively.

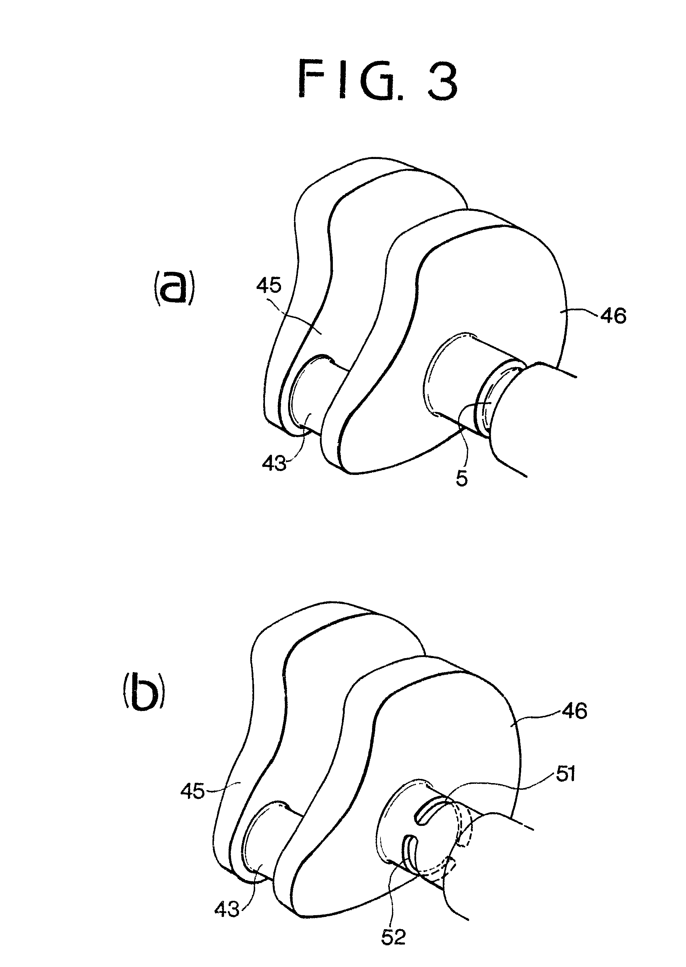

As shown in detail in Figure 3a, formed on the periphery of the third main-bearing journal 23 adjacent to the flywheel 6 is an annular groove 5, the inside diameter of which is made to maintain sufficient strength in the crankshaft. The bottom of the groove 5 has an arcuate portion in longitudinal section of the main-bearing journal 23.

The function of the crankshaft 1 constructed as explained above will now be explained. As mentioned above, a crankshaft having the heavy flywheel at its output end may be subject to great stresses at the point B of Figure 4a. In the embodiment of the present invention, such stresses are diverged by the function of the annular groove 5.

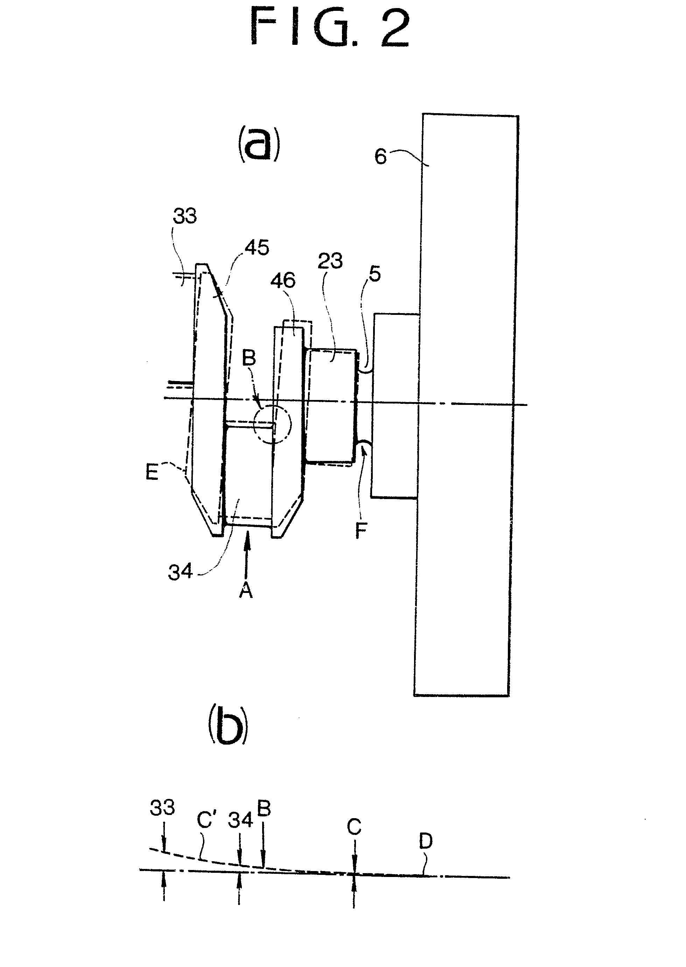

Referring to Figure 2a, when a force is applied to the fourth connecting-rod journal 34 in the direction of the arrow A through the connecting-rod (not shown) of the piston, the massive flywheel 6 is hardly deflected, but the third main-bearing journal 23 of the crankshaft 1, arm 46, fourth connecting-rod journal 34, arm 45, and third connecting-rod journal 33 may be deflected as shown by the broken line E in Figure 2a. However, the stresses are divided between two positions, one of which is the juncture B of the fourth connecting-rod journal 34 and the arm 46 and the other is a point F in the bottom of the annular groove 5 of the third main-bearing journal 23. As shown in Figure 2b, the crankshaft is bent at the point F and the deflection is shown by line C' (broken line) with respect to the axis D of the crankshaft (a chain line).

Accordingly, the stresses conventionally concentrated at the point $\underline{B}$ of the crankshaft is now divided between two positions, i.e. the point B and the point F by the provision of the annular groove 5. Thus, the stress at the juncture B is reduced compared with the conventional crankshaft, so that the fatigue limit at the point B is improved. Further, since the third main-bearing journal 23 is made sufficiently strong despite the annular groove 5, the strength and rigidity of the crankshaft is maintained.

Although the annular groove 5 is formed on the whole of the periphery of the third main-bearing journal 23 in the first embodiment of the present invention, a plurality of arcuate grooves 51 and 52 may be provided as shown in Figure 3b, so as to divert the stress at the juncture $\underline{B}$.

From the foregoings, it is now clear that the present invention provides a crankshaft having, at an end adjacent a flywheel, a journal provided with an annular groove so as to diverge stresses. Thus, the crankshaft of the present invention can be employed in an engine having large torque and large output. Further, when used in an engine of the same torque and output as the conventional engine, the crankshaft can be made light in weight and simple in construction.

CLAIMS:

1.        A crankshaft for connection by an end to a flywheel (6) in an internal combustion engine, the crankshaft (1) having a main-bearing journal (23) at the end where the crankshaft and flywheel (6) connect, and characterised by a groove (5) at the periphery of the main-bearing journal (23), whereby when the crankshaft is subject to a bending force the shaft can flex at the groove.

2.        A crankshaft as claimed in claim 1, wherein the groove (5) is an annular groove.

3.        A crankshaft as claimed in claim 1, wherein there are a plurality of arcuate grooves.

4.        A crankshaft as claimed in claims 1, 2 or 3, wherein the bottom of the or each groove (5) has an arcuate portion in longitudinal section of the main-bearing journal (23).

5.        An internal combustion engine comprising a crankshaft (1), and a flywheel (6) connected to one end of the crankshaft (1), the crankshaft (1) having a main-journal (23) bearing at the end of the crankshaft to which the flywheel is connected, characterised by a groove (5) at the periphery of the main-bearing journal (23), whereby when the crankshaft is subject to a bending force the shaft can flex at the groove.

0168153

## FIG. 1

# FIG. 2

(a)

(b)

# FIG. 3

(a)

45

46

43

5

(b)

46

45

51

43

52

0168153

# FIG. 4

(a)

(b)